# EUROPÄISCHE PATENTANMELDUNG

(11) **EP 4 391 621 A1**
(43) Veröffentlichungstag der Anmeldung: **26.06.2024**
(21) Anmeldenummer: 23206432.9
(22) Anmeldetag: 27.10.2023
(51) Int. Cl.: H04W 12/50, H04W 12/06, H04W 12/71, H04W 4/40, B60P 3/40, H04W 36/08

(54) **KABELLOSE STEUERUNGSVORRICHTUNG FÜR EIN TRANSPORTFAHRZEUG, INSBESONDERE EIN MODULARES TRANSPORTFAHRZEUG, EIN MIT EINER DERARTIGEN STEUERUNGSVORRICHTUNG AUSGERÜSTETES TRANSPORTFAHRZEUG SOWIE EIN VERFAHREN ZUM BETREIBEN EINES DERARTIGEN TRANSPORTFAHRZEUGS**

(30) Priorität: 20.12.2022 DE 102022214056
(71) Anmelder: Scheuerle Fahrzeugfabrik GmbH, 74629 Pfedelbach (DE)
(72) Erfinder: Weiß, Martin, 74635 Kupferzell (DE); Krasser, Marco, 74626 Bretzfeld (DE)
(74) Vertreter: Ullrich & Naumann PartG mbB

(57) **Zusammenfassung**

Die Erfindung betrifft eine kabellose Steuerungsvorrichtung für ein Transportfahrzeug (1), welche mindestens ein Bedienteil (13) und mindestens einen Funkempfänger (11, 12; 11-12d) besitzt, dadurch gekennzeichnet, dass in einer zentralen Funk-Steuereinheit (15) und/oder dezentral kontinuierlich, quasikontinuierlich oder in diskreten Zeitabständen die Signalqualität des von dem mindestens einen Bedienteil (13) abgesandten Funksignals für mindestens zwei Funkempfänger (11, 12; 11-12d) bewertet wird und eine automatische Umschaltung von dem aktuell mit dem mindestens einen Bedienteil (13) gepaarten Funkempfänger (11; 11) zu einem anderen Funkempfänger (12; 11a-12d) erfolgt, wenn durch die Verwendung eines anderen Funkempfängers (12; 11a-12d) eine verbesserte Signalqualität erzielbar ist.

## Beschreibung

Die Erfindung betrifft eine kabellose Steuerungsvorrichtung für ein Transportfahrzeug, insbesondere ein modulares Transportfahrzeug, die mindestens ein Bedienteil und mindestens einen Funkempfänger aufweist, ein mit einer derartigen Steuerungsvorrichtung ausgerüstetes Transportfahrzeug, welches ein Fahrgestell mit einer Anzahl von Radanordnungen aufweist, wobei mindestens eine Radanordnung mittels einer kabellosen Steuerungsvorrichtung steuerbar ist, sowie ein Verfahren zum Betreiben eines derartigen Transportfahrzeugs.

Derartige Transportfahrzeuge sind bekannt und werden insbesondere als Schwerlast-Transportfahrzeuge und hierbei insbesondere als modulare Schwerlast-Fahrzeuge ausgebildet und eingesetzt. Aus der DE 10 2014 007 797 A1 der Anmelderin ist ein modulares Schwerlast-Fahrzeug mit integriertem Antrieb beschrieben, bei dem mehrere Fahrzeugmodule nebeneinander und/oder hintereinander angeordnet werden, so dass durch eine mechanische Verbindung der einzelnen Fahrzeugmodule ein modular aufgebautes Transportfahrzeug ausgebildet wird. Die einzelnen Fahrzeugmodule weisen mindestens eine oder mehrere jeweils mit mindestens einem Antriebsmotor angetriebene Radanordnungen auf. In der vorgenannten Druckschrift ist ebenfalls ein Fahrzeug-Verbund beschrieben, der aus einer Zugmaschine und mehreren von dieser gezogenen Fahrzeugmodulen, insbesondere nachlaufende Fahrzeugmodule wie Anhänger besteht. Ein oder mehrere dieser Fahrzeugmodule weisen mindestens eine angetriebene Radanordnung auf, die von der Antriebseinheit der Zugmaschine mit der zum Antrieb der Antriebseinheit der mindestens einen Radanordnung erforderlichen Energie versorgt wird. Zur Steuerung der Antriebseinheiten des oder der Fahrzeugmodule ist eine Steuereinrichtung vorgesehen. Die Ansteuerung der Antriebseinheiten kann entweder Fahrzeugmodul-intern, also jeweils auf ein einziges Fahrzeugmodul - wie z. B. einem einzigen Anhänger - bezogen durchgeführt werden. Es ist aber auch möglich, dass die Steuereinrichtung der angetriebenen Radanordnungen der Fahrzeugmodule deren Antriebseinheiten Fahrzeugmodul-übergreifend steuert. Es ist vorgesehen, dass die Steuereinrichtung kabellos, also über eine Funkstrecke, mit einer Bedieneinheit verbunden ist, durch die ein Fahrer des Transportfahrzeugs oder eine sonstige am Transport mitwirkende Person das Transportfahrzeug steuern kann.

Bei den bekannten Transportfahrzeugen ist hierzu vorgesehen, dass das Bedienteil mit einem einzelnen Funkempfänger zusammenwirkt, der am Transportfahrzeug angeordnet ist. Beim Transportvorgang ist es aber oft erforderlich, dass der Bediener seine Position relativ zum Transportfahrzeug ändert, um z. B. bei einer engen Passage zu kontrollieren, ob das Transportfahrzeug passieren kann, ohne dass das Transportfahrzeug und/oder die von ihm transportierte Last mit Hindernissen kollidiert. Entfernt sich der Bediener und somit das von ihm verwendete Bedienteil zu weit von dem Funkempfänger, so wird in vielen Fällen die Reichweite des vom Bedienteil ausgesandten Funksignals überschritten, mit der Folge, dass der Funkkontakt mit dem Funkempfänger des Transportfahrzeugs verlorengeht oder sich zumindest signifikant verschlechtert. Eine derartige Situation kann auch durch die Ladung des Transportfahrzeugs hervorgehoben werden, welche oft aus großen Stahlteilen besteht, so dass sich bei einer ungünstigen Position des Bedieners das Bedienteil in der Abschattung der Ladung befindet.

Transportaufgaben wie z. B. ein Transport einer Schiffsektion oder eines sehr langen Objekts erfordern es oft, dass eine Vielzahl von Fahrzeugmodulen wie vorstehend beschrieben aneinander gekoppelt werden, so dass das daraus ausgebildete modulare Transportfahrzeug relativ lang ist. Auch hier tritt das Problem auf, dass der Abstand des Bedienteils vom Funkempfänger schnell die Systemgrenzen des durch das Bedienteil und dem ihm zugeordneten Funkempfänger ausgebildeten Funksystems erreicht.

Wenn der Funkkontakt zwischen Bedienteil und Funkempfänger abbricht oder derart verschlechtert ist, dass ein sicherer Betrieb des Transportfahrzeugs nicht mehr gewährleistet ist, so führt dies in der Regel dazu, dass das Transportfahrzeug von einer Sicherheitseinrichtung abgeschaltet wird und somit stehenbleibt. Der Bediener muss dann in zeitaufwendiger Art und Weise den Funkempfänger an einer geeigneten Stelle des Transportfahrzeugs befestigen, so dass wieder ein Funkkontakt zwischen Bedienteil und Funkempfänger gegeben ist. Der Einsatz des Transportfahrzeugs wird hierdurch in nachteiliger Art und Weise unterbrochen, was zu unerwünschten Stillständen führt.

Es ist auch bekannt, dass ein Transportfahrzeug mehrere einem Bedienteil zugeordnete Funkempfänger besitzt. Eine derartige Vorgangsweise ist aber nicht nur aus dem Grund nachteilig, dass sie einen hohen apparativen Aufwand mit sich bringt. Vielmehr ist auch der Betrieb eines derart ausgestatteten Transportfahrzeugs nicht zufriedenstellend, da - wenn der Bediener von einem Funkempfänger zu einem anderen Funkempfänger wechseln möchte - er sich zuerst von dem aktuellen Funkempfänger abmelden muss, bevor er sich an einem anderen Funkempfänger anmelden kann. Da es aus Gründen der Transportsicherheit zwingend ist, das Transportfahrzeug zu stoppen, wenn ein Funkkontakt mit dem Bedienteil nicht mehr gegeben ist, führt dies in der Regel zu unerwünschten Unterbrechungen des Transportvorgangs. Erst wenn der Bediener seinen Standort gewechselt und das Bedienteil Funkkontakt mit einem anderen Funkempfänger des Transportfahrzeugs hat, kann sich der Bediener über das Bedienteil wieder am Funksystem des Transportfahrzeugs anmelden, so dass der Transportvorgang fortgesetzt werden kann.

Es ist daher Aufgabe der vorliegenden Erfindung, eine kabellose Steuerungsvorrichtung für ein Transportfahrzeug der eingangs genannten Art derart weiterzubilden, dass Funksignal-bedingte Unterbrechungen des Transportvorgangs verhindert oder zumindest reduziert werden. Auch soll ein für die erfindungsgemäße kabellose Steuerungsvorrichtung besonders geeignetes Transportfahrzeug vorgeschlagen und ein Verfahren zum Betrieb eines derartigen Transportfahrzeugs geschaffen werden.

Zur Lösung dieser Aufgabe schlägt die erfindungsgemäße kabellose Steuerungsvorrichtung vor, dass in einer zentralen Funk-Steuereinheit und/oder dezentral kontinuierlich, quasi-kontinuierlich oder in diskreten Zeitabständen die Signalqualität des von dem mindestens einen Bedienteil abgesandten Funksignals für mindestens zwei Funkempfänger bewertet wird und eine automatische Umschaltung von dem aktuell mit dem mindestens einen Bedienteil gepaarten Funkempfänger zu einem anderen Funkempfänger erfolgt, wenn durch die Verwendung eines anderen Funkempfängers eine verbesserte Signalqualität erzielbar ist.

Das erfindungsgemäße Transportfahrzeug zeichnet sich dadurch aus, dass die erfindungsgemäße kabellose Steuerungsvorrichtung verwendet wird.

Das erfindungsgemäße Verfahren zur Steuerung eines Transportfahrzeugs ist dadurch charakterisiert, dass die erfindungsgemäße Steuerungsvorrichtung verwendet wird.

Durch die erfindungsgemäßen Maßnahmen wird in vorteilhafter Art und Weise eine kabellose Steuerungsvorrichtung für ein Transportfahrzeug, insbesondere für ein modulares Transportfahrzeug geschaffen, welches sich dadurch auszeichnet, dass eine automatische Umschaltung von einem Funkempfänger zu einem anderen Funkempfänger durchgeführt wird, wenn die Auswertung der von den Funkempfängern empfangenen Funksignale des Bedienteils ergibt, dass durch die Verwendung eines anderen Funkempfängers als dem aktuell mit dem Bedienteil gepaarten Funkempfänger eine verbesserte Signalqualität erzielbar ist. Durch diese automatische Umschaltung von einem Funkempfänger zu einem anderen Funkempfänger, wobei vorzugsweise die Umschaltung unter Berücksichtigung von Bewertungskriterien durchgeführt wird, wird in vorteilhafter Art und Weise erreicht, dass der Transportvorgang des mit der erfindungsgemäßen kabellosen Steuerungsvorrichtung ausgerüsteten Transportfahrzeugs nicht - wie dies bei den bekannten Systemen der Fall ist - unterbrochen wird, so dass ein Transportvorgang rationell durchgeführt werden kann.

Ein weiterer Vorteil der erfindungsgemäßen kabellosen Steuerungsvorrichtung für ein Transportfahrzeug besteht darin, dass dadurch alle im Transportfahrzeug vorhandenen Funkempfängern genutzt werden können, so dass die Funkabdeckung verbessert und die Reichweite des Funksystems erhöht wird.

Eine vorteilhafte Weiterbildung der Erfindung sieht vor, dass eine Umschaltung von einem Funkempfänger auf einen anderen Funkempfänger nur dann erfolgt, wenn die Signalqualität der Funkverbindung zwischen dem Bedienteil und dem anderen Funkempfänger um einen vorgegebenen oder vorgebbaren Faktor besser ist als die Signalqualität der Funkverbindung der aktuellen Paarung zwischen Bedienteil und Funkempfänger. Eine derartige Maßnahme besitzt den Vorteil, dass durch ein ungewolltes Wechseln zwischen den Funkempfängern vermieden wird.

Eine weitere vorteilhafte Weiterbildung der Erfindung sieht vor, dass das Bedienteil zusammen mit dem Funksignal oder zusätzlich zu diesem ein Identifikationssignal aussendet. Eine derartige Maßnahme besitzt den Vorteil, dass hierdurch eine Einbeziehung systemfremder Bedienteile in die Fernsteuerung des Transportfahrzeugs und/oder die Verbindung von systemexternen Funkempfängern anderer in der Umgebung des erfindungsgemäßen Transportfahrzeugs befindlichen weiteren Transportfahrzeugen unterbunden wird.

Eine weitere vorteilhafte Weiterbildung der Erfindung sieht vor, dass einem Bedienteil nur ein oder mehrere Untergruppen aus der Gruppe der verfügbaren Funkempfänger zuordbar ist. Eine derartige Maßnahme besitzt den Vorteil, dass gemäß einer weiteren vorteilhaften Weiterbildung der Erfindung der erfindungsgemäßen kabellosen Steuerungsvorrichtung zwei oder mehr Bedienteile zugeordnet werden können, welche unterschiedliche Komponenten des erfindungsgemäßen Transportfahrzeugs insbesondere fahrwerkexterne Komponenten wie z. B. ein auf der Transportfläche des Transportfahrzeugs angeordneter Drehschemel, gesteuert werden können.

Weitere vorteilhafte Weiterbildungen der Erfindung sind Gegenstand der Unteransprüche.

Weitere Einzelheiten und Vorteile der Erfindung sind den Ausführungsbeispielen zu entnehmen, die im Folgenden anhand der Figuren beschrieben werden. Es zeigen:
- Fig. 1 und 2: eine schematische Darstellung eines ersten Ausführungsbeispiels einer kabellosen Steuerungsvorrichtung zusammen mit einer ersten Ausführungsform eines Transportfahrzeugs, und
- Fig. 3: ein zweites Ausführungsbeispiel eines zweiten Ausführungsbeispiels einer kabellosen Steuerungsvorrichtung zusammen mit einer zweiten Ausführungsform eines Transportfahrzeugs.

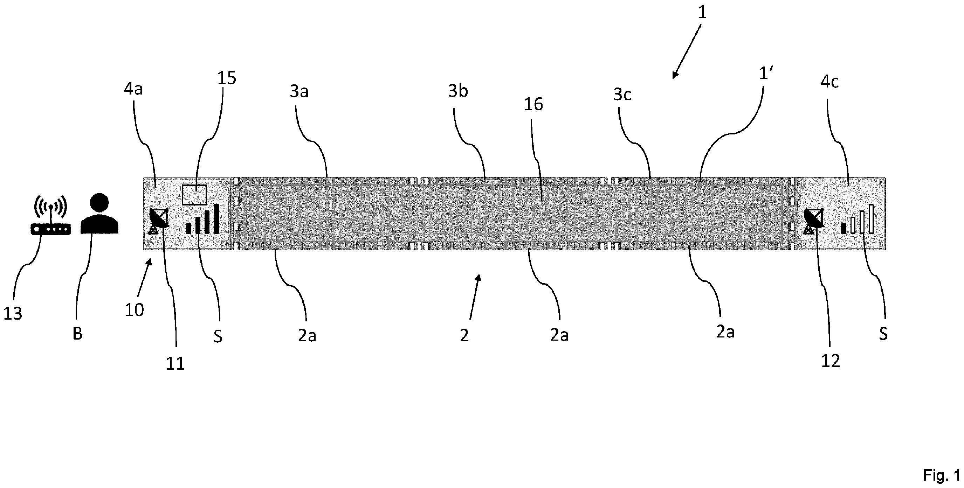

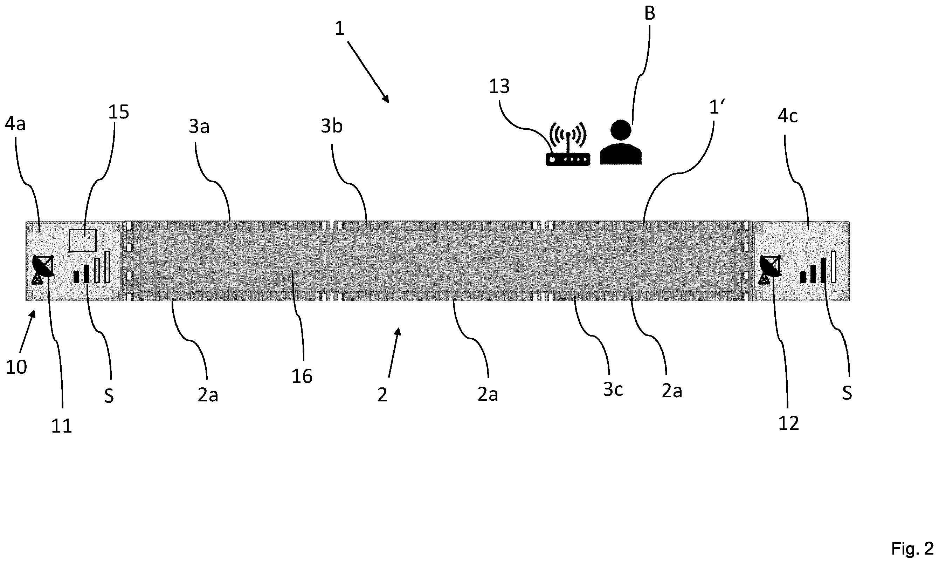

In den Figuren 1 und 2 ist schematisch eine Draufsicht auf eine Transportfläche 1' eines allgemein mit 1 bezeichneten Transportfahrzeugs dargestellt, wobei auf der Transportfläche 1 eine Ladung 16 angeordnet ist. Ein derartiges Transportfahrzeug 1 ist dem Fachmann z. B. aus der DE 10 2005 048 455 A1 bekannt und muss daher nicht mehr näher beschrieben werden. Der Vollständigkeit halber soll nur angeführt werden, dass das Transportfahrzeug 1 ein Fahrwerk 2 aufweist, unter dem eine Anzahl von Radanordnungen 2a vorgesehen ist, wobei mindestens eine Radanordnung steuerbar ist. Im hier gezeigten Ausführungsbeispiel weist das Transportfahrzeug 1 drei Fahrzeugmodule 3a, 3b und 3c auf, welche mechanisch miteinander gekoppelt sind. Dem Fachmann ist auch hier ersichtlich, dass es nicht zwingend ist, das Transportfahrzeug 1 modular auszubilden. Vielmehr kann anstelle der beim ersten Ausführungsbeispiel vorgesehenen drei Fahrzeugmodule 3a, 3b, 3c ein einziges Fahrzeugmodul, welches dann die Länge der drei Fahrzeugmodule 3a, 3b, 3c besitzt, eingesetzt sein. Jedes der beiden endseitigen Fahrzeugmodule 3a, 3c weist - im hier gezeigten Ausführungsbeispiel - eine Antriebseinheit 4a und 4c auf, welche die zum Antrieb der Radanordnungen 2a, insbesondere zum Antrieb der mindestens einen steuerbaren Radanordnung, erforderliche Antriebsenergie bereitstellen. Es soll hier noch erwähnt werden, dass unter dem Begriff "Antrieb" oder "antreibbar" jedwede Maßnahme zu verstehen ist, durch welche eine oder mehrere Radanordnungen 2a bewegt werden. Ein derartiger Antrieb kann auch lediglich darin bestehen, dass eine Steuerbewegung der mindestens einen steuerbaren Radanordnung 2a durchgeführt wird.

Das Transportfahrzeug 1 weist beim hier beschriebenen Ausführungsbeispiel eine kabellose Steuerungsvorrichtung 10 mit zwei Funkempfängern 11 und 12 auf, welche dazu dienen, eine Funkverbindung mit einem Bedienteil 13 der Steuerungsvorrichtung 10 herzustellen und von diesem ausgesandte Funksignale zu empfangen bzw. an dieses zu senden. Dem Fachmann ist bewusst, dass in der Regel eine derartige Funkkommunikation zwischen den Funkempfängern 11 und 12 und dem Bedienteil 13 nicht nur uni-direktional, sondern bidirektional erfolgt, d. h. dass die Funkempfänger 11 und 12 nicht nur Funksignale des Bedienteils 13 empfangen, sondern ihrerseits auch Funksignale an das Bedienteil 13 senden. Im Sinne einer prägnanteren Beschreibung wird aber nachstehend für diese Komponenten des im Wesentlichen durch die Funkempfänger 11 und 12 und das Bedienteil 13 ausgebildeten kabellosen Steuerungsvorrichtung 10 der Begriff "Funkempfänger" verwendet.

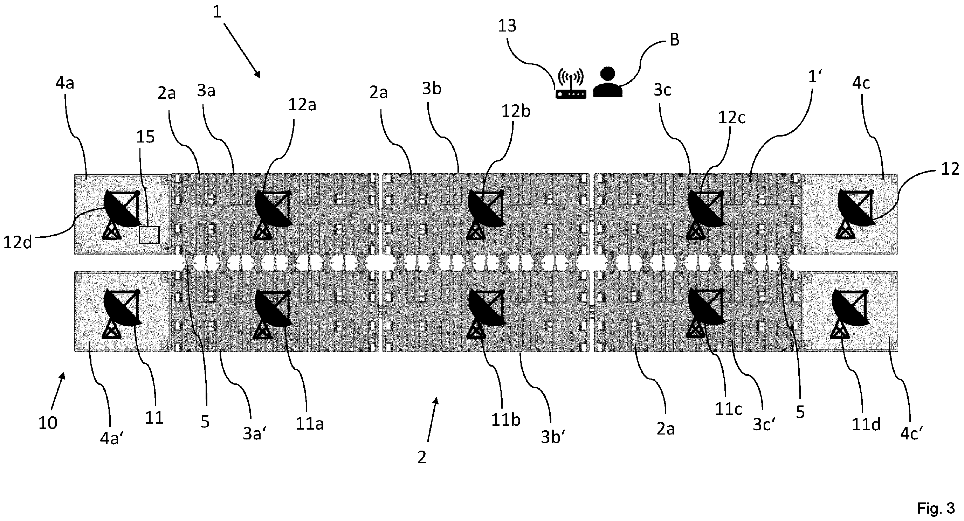

Dem Fachmann ist aus der nachfolgenden Beschreibung ebenfalls ersichtlich, dass es nicht zwingend ist, dass das Transportfahrzeug 1 nur zwei Funkempfänger 11 und 12 besitzt. Vielmehr ist es durchaus möglich und für eine Reihe von Anwendungsfällen durchaus vorteilhaft, dass das Transportfahrzeug 1 - wie beim zweiten Ausführungsbeispiel der Figur 3 - mehr als zwei Funkempfänger 11, 12 aufweist. Die nachstehend erläuterte Konstellation von zwei Funkempfängern 11 und 12 schränkt aber die Allgemeingültigkeit der folgenden Ausführungen nicht ein.

Im hier beschriebenen ersten Ausführungsbeispiel sind die beiden Funkempfänger 11 und 12 an entgegengesetzten Enden des Transportfahrzeugs 1, also in oder an den Fahrzeugmodulen 3a und 3c angeordnet. Wie in den Figuren 1 und 2 dargestellt, sind die Funkempfänger 11 und 12 in oder an den mit den Fahrzeugmodulen 3a und 3d verbundenen Antriebseinheiten 4a, 4c angeordnet. Auch dies ist aber nicht zwingend, es ist z. B. auch möglich, dass die beiden Funkempfänger 11, 12 in der Mitte des Transportfahrzeugs 1 - z. B. im oder am mittleren Fahrzeugmodul 3b - an gegenüberliegenden Seiten angeordnet sind, um nur ein Beispiel zu nennen. Jeder der beiden Funkempfänger 11 und 12 ist über eine Signalleitung (nicht gezeigt) mit einer Funk-Steuereinheit 15 der Steuerungsvorrichtung 10 verbunden. Diese Funk-Steuereinheit 15 kann als eigenständige Steuereinheit ausgebildet sein, es ist aber auch möglich, dass diese Funk-Steuereinheit 15 in eine bereits vorhandene Steuereinheit des Transportfahrzeugs 1 integriert ist. Die einzelnen Funkempfänger 11 und 12 können auch als intelligente Funkempfänger ausgebildet sein, d. h. anstelle oder in Ergänzung zu der zentralen Funk-Steuereinheit 15 können die von dieser Funk-Steuereinheit 15 durchgeführten Funktionen ganz oder teilweise in die intelligent ausgebildeten Funkempfänger 11 und/oder 12 verlagert sein. Dann ist vorzugsweise vorgesehen, dass die einzelnen Funkempfänger 11 und 12 miteinander vernetzt sind. Im Folgenden wird aber davon ausgegangen, dass die Kommunikation des Bedienteils 13 mit mindestens einem der Funkempfänger 11 und 12 von der Funk-Steuereinheit 15 gesteuert wird. Dem Fachmann ist aber aus der nachfolgenden Beschreibung ohne Weiteres ersichtlich, welche Maßnahmen er vorzunehmen hat, wenn er einen oder mehrere der Funkempfänger 11, 12 als intelligente Funkempfänger ausbilden möchte. Es soll noch angemerkt werden, dass es nicht zwingend ist, dass die Funkempfänger 11 und 12 mit der Funk-Steuereinheit 15 über Signalleitungen verbunden sind, auch eine kabellose Verbindung ist möglich.

Die Funktion der Steuerungsvorrichtung 10 und somit des mit dieser kabellosen Steuerungsvorrichtung 10 ausgestatteten Transportfahrzeugs 1 ist nun wie folgt: Soll nun das Transportfahrzeug 1 von einem Bediener B mittels des Bedienteils 13 gesteuert werden, so schaltet der Bediener B dieses Bedienteil 13 ein. Das ausgesandte Funksignal wird von mindestens einem Funkempfänger 11 und 12 empfangen und zu der Funk-Steuereinheit 15 geleitet. Im hier gezeigten Ausführungsbeispiel wird davon ausgegangen, dass das Funksignal des Bedienteils 13 sowohl von dem ersten Funkempfänger 11 als auch von dem zweiten Funkempfänger 12 empfangen wird. Es ist aber grundsätzlich ausreichend, dass in dieser Initialisierungsphase das Funksignal des Bedienteils 13 von wenigstens einem Funkempfänger 11 oder 12 empfangen wird. Bei dem in den Figuren 1 und 2 dargestellten Ausführungsbeispiel wird davon ausgegangen, dass - wie durch die Signalbalken S neben den Funkempfängern 11 und 12 charakterisiert, der Funkempfänger 11, der sich in der Nähe des Bedienteils 13 befindet - ein stärkeres Funksignal empfängt (vier Signalbalken S) als der sich an der gegenüberliegenden Seite des Transportfahrzeugs 1 befindliche Funkempfänger 12 (nur ein Signalbalken S).

Diese von den Funkempfängern 11 und 12 empfangenen Funksignale werden an die Funk-Steuereinheit 15 weitergeleitet. Es ist aber nicht zwingend erforderlich, dass diese Funksignale insgesamt zu der Funk-Steuereinheit 15 weitergeleitet werden, vielmehr ist es ausreichend, wenn ein die Signalqualität des jeweiligen Funksignals repräsentierendes Signal von jedem Funkempfänger 11 und 12 zu der Funk-Steuereinheit 15 weitergeleitet wird. Eine derartige Maßnahme reduziert die Datenmenge, welche von den Funkempfängern 11 und 12 zu der Funk-Steuereinheit 15 geleitet werden muss. Bei der folgenden Beschreibung wird der Einfachheit halber davon ausgegangen, dass die von den Funkempfängern 11 und 12 empfangenen Signale zu der Funk-Steuereinheit 15 geleitet werden. Dem Fachmann ist ohne Weiteres ersichtlich, welche Maßnahmen er vorzunehmen hat, wenn - wie vorstehend ausgeführt - nur ein die Signalqualität des empfangenen Funksignals repräsentierendes Signal von den Funkempfängern 11 und 12 zu der Funk-Steuereinheit 15 geleitet werden soll.

Die Funk-Steuereinheit 15 bestimmt für jeden Funkempfänger 11, 12 die Signalqualität des Funksignals des Bedienteils 13. Aus den von ihr erfassten Werten der beiden Funkempfänger 11, 12 wird ermittelt, welcher Funkempfänger 11 oder 12 das Funksignal mit der höchsten Signalqualität bereitstellt. Die Funk-Steuereinheit 15 ordnet dann dem Bedienteil 13 denjenigen der beiden Funkempfänger 11, 12 zu, welcher das Funksignal des Bedienteils 13 mit der größten Signalqualität empfängt. Im hier beschriebenen ersten Ausführungsbeispiel ist dies annahmegemäß der erste Funkempfänger 11 (Signalqualität vier Signalbalken S).

Der Begriff "Signalqualität" ist hierbei in seiner breitesten Bedeutung zu verstehen. Üblicherweise wird die Signalqualität im Wesentlichen durch die Signalstärke des empfangenen Funksignals bestimmt. Es ist aber auch möglich, andere Kriterien als die Signalstärke bei der Bestimmung der Signalqualität zu berücksichtigen. Es ist auch denkbar, dass die Signalstärke bei der Bestimmung der Signalqualität nicht berücksichtigt wird.

Vorzugsweise ist vorgesehen, dass das Funksignal des Bedienteils 13 eine Senderkennung enthält, welche für das aktuell verwendete Bedienteil 13 charakteristisch ist. Eine derartige Maßnahme besitzt den Vorteil, dass hierdurch eine eindeutige Zuordnung zwischen Funksignal und Bedienteil 13 ermöglicht wird, welche verhindert, dass andere, sich in der Umgebung des Transportfahrzeugs 1 befindliche weitere Bedienteile, also Bedienteile, welche nicht oder nicht zum aktuellen Zeitpunkt dem Transportfahrzeug 1 zugeordnet werden sollen, in den Steuerprozess eingehen.

Nach dieser Initiierung und Paarung des Bedienteils 13 mit einem bestimmten Funkempfänger 11 oder 12 - hier dem ersten Funkempfänger 11 - wird während des weiteren ferngesteuerten Betriebs des Transportfahrzeugs 1 die Signalqualität der von den Funkempfängern 11 und 12 empfangenen Funksignale des Bedienteils 13 kontinuierlich, quasi-kontinuierlich oder in diskreten Zeitabständen von der Funk-Steuereinheit 15 erfasst. Die Funk-Steuereinheit 15 überprüft, ob die aktuelle Paarung Bedienteil 13 - Funkempfänger 11 noch die beste Signalqualität besitzt, oder ob - etwa verursacht durch eine Bewegung des Bedieners B und/oder des Transportfahrzeugs 1 und/oder durch weitere Umstände wie z. B. die Last des Transportfahrzeugs 1 - eine andere Kombination von Bedienteil 13 und Funkempfänger 11, 12 eine bessere Signalqualität und somit eine bessere Funkverbindung zwischen Bedienteil 13 und Transportfahrzeug 1 ermöglichen würde. Stellt die Funk-Steuereinheit 15 fest, dass eine derartige Konstellation vorliegt, d. h. dass die Signalqualität des vom zweiten Funkempfänger 12 empfangenen Signals des Bedienteils 13 besser als die Signalqualität des aktuell mit dem Bedienteil 13 gepaarten ersten Funkempfängers 11 ist, so führt die Funk-Steuereinheit 15 eine Umschaltung zwischen dem ersten Funkempfänger 11 und dem zweiten Funkempfänger 12 durch, sie ändert somit die Paarung des Bedienteils 13 derart, dass dieses nun dem zweiten Funkempfänger 12 zugeordnet ist.

Beim hier beschriebenen Ausführungsbeispiel bewegt sich der Bediener B von seiner in Figur 1 gezeigten Position, in der sich das Bedienteil 13 nahe dem ersten Funkempfänger 11 befindet, in seine in Figur 2 gezeigte Position, in der sich das Bedienteil 13 näher am zweiten Funkempfänger 12 befindet als bei der Position des Bedieners B der Figur 1. Wie durch die drei Signalbalken S des Funkempfängers 12 repräsentiert ist die Signalqualität des vom zweiten Funkempfänger 12 empfangenen Signals des Bedienteils 13 größer als die Signalqualität des vom ersten Funkempfänger 11 empfangenen Signals (zwei Signalbalken S). Die Funk-Steuereinheit 15 schaltet dann vom ersten Funkempfänger 11 auf den zweiten Funkempfänger 12 um, sie paart also das Bedienteil 13 nun mit dem zweiten Funkempfänger 12. Ein derartiger Umschaltvorgang erfolgt in einer so kurzen Zeit, dass keine Abschaltung oder Verlangsamung des Transportfahrzeugs 1 erforderlich ist. Es wird somit in vorteilhafter Art und Weise erreicht, dass vom Funksignal bedingte Stillstandszeiten beim beschriebenen Transportfahrzeug 1 eliminiert oder zumindest weitgehend reduziert werden.

In Figur 3 ist nun ein zweites Ausführungsbeispiel eines Transportfahrzeugs 1 dargestellt, welches dem prinzipiellen Aufbau nach weitgehend mit demjenigen des ersten Ausführungsbeispiels übereinstimmt, so dass einander entsprechende Bauteile mit den gleichen Bezugszeichen versehen und hinsichtlich ihres Aufbaus und ihrer Funktion nicht mehr näher beschrieben werden. Der wesentliche Unterschied zwischen den beiden Ausführungsbeispielen besteht darin, dass das Transportfahrzeug 1 des zweiten Ausführungsbeispiels nicht nur eine einzige Reihe von drei hintereinander gekoppelten Fahrzeugmodulen 3a-3c aufweist, sondern eine zweite Reihe von aneinander gekoppelten Fahrzeugmodulen 3a`-3c`, welche ihrerseits mit den Fahrzeugmodulen 3a-3c der ersten Reihe von Fahrzeugmodulen über entsprechende Verbindungselemente 5 wie z. B. Querträger in der Querrichtung gekoppelt sind, so dass insgesamt ein aus den sechs Fahrzeugmodulen 3a-3c und 3a`-3c` gebildetes Transportfahrzeug 1 ausgebildet ist. Der wesentliche Unterschied zwischen diesen beiden Ausführungsbeispielen ist aber, dass beim zweiten Ausführungsbeispiel nicht nur die äußeren Fahrzeugmodule 3a und 3c, sondern auch das mittlere Fahrzeugmodul 3b und/oder mindestens eines der Fahrzeugmodule 3a'-3c' jeweils einen Funkempfänger 11, 11a-11d bzw. 12, 12a-12d besitzen. Eine derartige Ausgestaltung besitzt den Vorteil, dass auch bei sehr langen und/oder sehr breiten Transportfahrzeugen 1 eine hinreichend große Anzahl von Funkempfängern 11, 11a-11d, 12, 12a-12d zur Verfügung steht. Die Funktionsweise der weiteren Funkempfänger 11a-11d und 12a-12d entspricht derjenigen der Funkempfänger 11 und 12, so dass eine erneute Beschreibung nicht erforderlich ist. Jeder der Funkempfänger 11-11d und 12-12d ist über eine Signalverbindung mit der Funk-Steuereinheit 15 verbunden. Es ist natürlich auch möglich, dass - wie beim ersten Ausführungsbeispiel beschrieben - eine oder mehrere Funkempfänger 11-12d als intelligenter Funkempfänger ausgebildet ist.

Zu Beginn des ferngesteuerten Transportvorgangs schaltet der Bediener B wieder das Bedienteil 13 ein und die Funk-Steuereinheit 15 ermittelt für jeden der n (hier n = 10) Funkempfänger 11-12d die Signalqualität des Funksignals des Bedienteils 13 und paart dieses mit demjenigen Funkempfänger (hier wiederum mit dem Funkempfänger 11), für welchen die Signalqualität des empfangenen Signals am größten ist. In der Folgezeit überwacht die Funk-Steuereinheit 15 - wie beim ersten Ausführungsbeispiel - kontinuierlich, quasi-kontinuierlich oder in diskreten Zeitabständen die Signalqualität der Funkempfänger 11-12d und ordnet dem Bedienteil 13 einen anderen Funkempfänger 11a-12d zu, wenn die Signalqualität des von diesem Funkempfänger, z. B. des Funkempfängers 12b, empfangenen Signals des Bedienteils 13 größer ist als diejenige des aktuellen Funkempfängers 11. Dieser Vorgang wird für die n Funkempfänger 11-12d kontinuierlich oder in diskreten Zeitabständen weiter durchgeführt und es erfolgt - wie auch beim ersten Ausführungsbeispiel - eine entsprechende Umschaltung.

Es wird aber bei den beiden Ausführungsbeispielen bevorzugt, dass eine neue Paarung zwischen Bedienteil 13 und einem der Funkempfänger 11, 12 bzw. 11-12d nicht bereits dann erfolgt, wenn einer der nicht gepaarten Funkempfänger 11a-12d kurzfristig ein besseres Signal empfängt als der aktuelle Funkempfänger 11. Um ein ständiges Hin- und Herschalten zu vermeiden, kann vorgesehen sein, dass eine neue Paarung erst dann erfolgt, wenn eine neue Kombination von Bedienteil 13 und Funkempfänger 11-12d über einen vordefinierten oder vordefinierbaren Zeitraum eine bessere Signalqualität liefert als die aktuelle Paarung.

Ebenfalls kann ergänzend oder alternativ hierzu vorgesehen sein, dass eine neue Paarung erst dann erfolgt, wenn eine neue Kombination ein Funksignal mit einer deutlich besseren Signalqualität liefert als die aktuelle Konfiguration. Es kann z. B. vorgesehen sein, dass ein Umschaltvorgang erst dann durchgeführt wird, wenn die Signalqualität der aktuellen Konfiguration signifikant schlechter ist als die Signalqualität einer anderen Paarung von Bedienteil 13 und Funkempfänger 11a-12d. Als Beispiel hierzu soll aufgeführt werden, dass eine Umschaltung zwischen der aktuellen Konfiguration und einer neuen Konfiguration erst dann erfolgt, wenn die Signalqualität der aktuellen Paarung weniger als 30% der Signalqualität der bestmöglichen Paarung von Bedienteil 13 und Funkempfänger 11a-12d beträgt. Dem Fachmann ist aber ersichtlich, dass die vorgenannte Konstellation ("weniger als 30%") nur exemplarischen Charakter besitzt und es vielmehr möglich ist, ein beliebiges Verhältnis festzulegen.

Bei der vorstehenden Beschreibung der Ausführungsbeispiele wurde davon ausgegangen, dass nur ein einzelnes Bedienteil 13 eingesetzt. Es ist aber z. B. bei schwierigen Transportsituationen oftmals erforderlich, dass - als Beispiel - zwei oder mehr Radanordnungen des Transportfahrzeugs 1 unabhängig voneinander ferngesteuert werden, z. B. eine Radanordnung des in Fahrtrichtung vorderen Fahrzeugmoduls 3a und eine Radanordnung des in Fahrtrichtung hinteren Fahrzeugmoduls 3c. Eine anderen Situation, bei der der Einsatz von zwei Bedienteilen 13, welche von Bedienern B bedient werden, die sich an unterschiedlichen Orten relativ zum Transportfahrzeug 1 befinden, ist diejenige, dass durch eines der Bedienteile 13 eine steuerbare Komponente des Transportfahrzeugs 1, z. B. ein auf der Transportfläche 1' angeordneter Drehschemel, gesteuert werden soll.

Wie vorstehend ausgeführt, wird es bevorzugt, dass das Bedienteil 13 - vorzugsweise zusammen mit dem Funksignal oder in diesem enthalten - ein Identifikationssignal aussendet, welches das Bedienteil 13 identifiziert. Die Funk-Steuereinheit 15 - oder bei einem intelligenten Funkempfänger derselbe - überprüft nun anhand dieses Identifikationssignals, ob das anfragende Bedienteil 13 berechtigt ist, an der Steuerung des Transportfahrzeugs 1 teilzunehmen. Dies kann dadurch geschehen, dass in der Funk-Steuereinheit 15 die Identifikationssignale der zugelassenen Bedienteile 13 abgespeichert sind, es ist aber auch möglich, dass durch eine entsprechende Eingabe der Funk-Steuereinheit 15 vom Bediener B mitgeteilt wird, dass dieses Bedienteil 13 in das Kommunikationssystem integriert werden darf.

Hierdurch wird in einfacher Art und Weise unterbunden, dass systemfremde Bedienteile in die Steuerung des Transportfahrzeugs 1 eingreifen können und/oder dass ein Bedienteil 13 der beschriebenen kabellosen Steuerungsvorrichtung 10 in die Steuerung eines in der Nähe des Transportfahrzeugs 1 befindlichen weiteren Transportfahrzeugs eingreift.

Vorzugsweise ist nun vorgesehen, dass die Funk-Steuereinheit 15 anhand des Identifikationssignals festlegt, welche Funkempfänger 11, 12 bzw. 11-12d aus der Anzahl der verfügbaren Funkempfänger 11, 12 bzw. 11-12d einem bestimmten Bedienteil 13 zugeordnet sind, dass also hier die aktuell vorgesehenen Funkempfänger 11, 12 bzw. 11-12d in zwei oder mehr Gruppen unterteilt werden, wobei dann vorgesehen ist, dass dem Bedienteil 13 nur eine gewisse Anzahl der verfügbaren Gruppen von Funkempfängern 11, 12 bzw. 11-12d zugeordnet wird.

Es ist dann vorzugsweise vorgesehen, dass auch das zweite Bedienteil 13 ein spezifisches Identifikationssignal aussendet und die Funk-Steuereinheit 15 dem zweiten Bedienteil 13 nur Funkempfänger 11, 12 bzw. 11-12d bzw. Gruppen von Funkempfängern 11-12d zuordnet, welche nicht bereits dem ersten Bedienteil 13 zugeordnet sind. Es ist aber auch möglich, dass die Auswahl der für ein bestimmtes Bedienteil 13 zulässigen Funkempfänger 11-12d, d. h. die Auswahl derjenigen Funkempfänger 11-12d, welche mit dem oder einem bestimmten Bedienteil 13 gepaart werden dürfen, manuell festgelegt wird.

Zusammenfassend ist festzuhalten, dass durch die beschriebenen Maßnahmen in vorteilhafter Art und Weise eine kabellose Steuerungsvorrichtung 10 für ein Transportfahrzeug 1 geschaffen wird, welche sich dadurch auszeichnet, dass die Reichweite des durch das mindestens eine Bedienteil 13 und die mindestens zwei Funkempfänger 11, 12 bzw. 11-12d ausgebildeten Funksystems erweitert wird. Indem nun vorgesehen ist, dass eine automatische Umschaltung zwischen den einzelnen Funkempfängern 11, 12 bzw. 11-12d erfolgt, wenn dies aus Gründen der Signalqualität erforderlich ist, wird in vorteilhafter Art und Weise eine Unterbrechung des Transportvorgangs wenn nicht vermieden dann doch zumindest erheblich reduziert.

## Patentansprüche

1. Kabellose Steuerungsvorrichtung für ein Transportfahrzeug (1), welche mindestens ein Bedienteil (13) und mindestens einen Funkempfänger (11, 12; 11-12d) besitzt, **dadurch gekennzeichnet, dass** in einer zentralen Funk-Steuereinheit (15) und/oder dezentral kontinuierlich, quasi-kontinuierlich oder in diskreten Zeitabständen die Signalqualität des von dem mindestens einen Bedienteil (13) abgesandten Funksignals für mindestens zwei Funkempfänger (11, 12; 11-12d) bewertet wird und eine automatische Umschaltung von dem aktuell mit dem mindestens einen Bedienteil (13) gepaarten Funkempfänger (11; 11) zu einem anderen Funkempfänger (12; 11a-12d) erfolgt, wenn durch die Verwendung eines anderen Funkempfängers (12; 11a-12d) eine verbesserte Signalqualität erzielbar ist.

2. Steuerungsvorrichtung nach Anspruch 1, **dadurch gekennzeichnet, dass** in die Bestimmung der Signalqualität des Funksignals des Bedienteils (13) dessen Signalstärke eingeht.

3. Steuerungsvorrichtung nach einem der vorangehenden Ansprüche, **dadurch gekennzeichnet, dass** eine Umschaltung von einem Funkempfänger (11; 11) auf einen anderen Funkempfänger (12; 11a-12d) nur dann erfolgt, wenn die Signalqualität der Funkverbindung zwischen dem Bedienteil (13) und dem anderen Funkempfänger (12; 11a-12d) um einen vorgegebenen oder vorgebbaren Faktor besser ist als die Signalqualität der Funkverbindung der aktuellen Paarung zwischen Bedienteil (13) und Funkempfänger (11; 11).

4. Steuerungsvorrichtung nach einem der vorangehenden Ansprüche, **dadurch gekennzeichnet, dass** das Bedienteil (13) ein Identifikationssignal aussendet, welches zentral und/oder dezentral ausgewertet wird, und dass der dem Bedienteil (13) Zugriff auf die Steuerungsvorrichtung (10) erlangt, wenn das Identifikationssignal des anfragenden Bedienteils (13) von der Steuerungsvorrichtung (10) als zugriffsberechtigt authentifiziert wird.

5. Steuerungsvorrichtung nach einem der vorangehenden Ansprüche, **dadurch gekennzeichnet, dass** mindestens einem Bedienteil (13) nur eine oder mehrere Untergruppen aus der Gruppe der verfügbaren Funkempfänger (11, 12; 11-12d) zuordbar ist.

6. Steuerungsvorrichtung nach einem der vorangehenden Ansprüche, **dadurch gekennzeichnet, dass** die Steuerungsvorrichtung (10) mindestens zwei Bedienteile (13) aufweist, und dass vorzugsweise die dem ersten der mindestens zwei Bedienteile (13) zuordbare Untergruppe oder die zuordbaren Untergruppen disjunkt mit der Untergruppe oder den Untergruppen, die dem zweiten Bedienteil (13) zuordbar sind, ist.

7. Transportfahrzeug, insbesondere ein modulares Transportfahrzeug (1), welches ein Fahrwerk (2) mit einer Anzahl von Radanordnungen (2a) aufweist, wobei mindestens eine Radanordnung (2a) mittels einer kabellosen Steuerungsvorrichtung (10) steuerbar ist, **dadurch gekennzeichnet, dass** die kabellose Steuerungsvorrichtung (10) nach einem der Ansprüche 1 bis 6 ausgebildet ist.

8. Transportfahrzeug nach dem vorangehenden Anspruch, **dadurch gekennzeichnet, dass** das modular aufgebaute Transportfahrzeug (1) eine Anzahl von miteinander gekoppelten Fahrzeugmodulen (3a-3c; 3a`-3c`) besitzt, und dass in oder an mindestens einem Fahrzeugmodul (3a, 3c; 3a`, 3c`) mindestens ein Funkempfänger (11, 12; 11-12d) angeordnet ist.

9. Transportfahrzeug nach Anspruch 7 oder 8, **dadurch gekennzeichnet, dass** mindestens ein Funkempfänger (11, 12; 11-12d) in oder an einer Antriebseinheit (4a, 4c; 4a, 4c, 4a', 4c') angeordnet ist, und dass die Antriebseinheit (4a, 4c; 4a, 4c, 4a', 4c`) vorzugsweise an ein Fahrzeugmodul (3a, 3c; 3a, 3a', 3c, 3c`) angekoppelt ist.

10. Verfahren zur Steuerung eines Transportfahrzeugs (1) mittels einer kabellosen Steuerungsvorrichtung (10), **dadurch gekennzeichnet, dass** eine Steuerungsvorrichtung (10) gemäß einem der Ansprüche 1 bis 6 verwendet wird.
